Europäisches Patentamt

European Patent Office

Office européen des brevets

(11) Veröffentlichungsnummer: **0 084 625**
A2

## (12) EUROPÄISCHE PATENTANMELDUNG

(21) Anmeldenummer: 82110967.5

(22) Anmeldetag: 27.11.82

(51) Int. Cl.³: **H 04 B 9/00, H 04 L 25/49**

(30) Priorität: 21.01.82 DE 3201779

(43) Veröffentlichungstag der Anmeldung: 03.08.83
Patentblatt 83/31

(84) Benannte Vertragsstaaten: **AT BE CH DE FR GB IT LI NL SE**

(71) Anmelder: **AEG - TELEFUNKEN Nachrichtentechnik GmbH, Gerberstrasse 33, D-7150 Backnang (DE)**

(72) Erfinder: **Pfeiffer, Theodor, Dr., Kelterweg 42, D-7012 Fellbach (DE)**

(74) Vertreter: **Schickle, Gerhard, Dipl.-Ing. et al, AEG-TELEFUNKEN Nachrichtentechnik GmbH K1 E7 Gerberstrasse 33, D-7150 Backnang (DE)**

(54) Lichtwellenleiter-übertragungssystem.

(57) Lichtwellenleiter-Übertragungssystem mit Regenerierung der längs des Übertragungsweges gedämpften und verzerrten Lichtimpulse, wobei in den Endstellen und in den Zwischenregeneratoren die Lichtimpulse (1) in bipolare elektrische Impulse umgesetzt werden, die mittels Regeneratoren für PCM-Systeme (PCM-REG) regeneriert werden, und wobei die so regenerierten bipolaren elektrischen Impulse (2) in den Zwischenregeneratoren wieder in Lichtimpulse (3) umgesetzt werden.

EP 0 084 625 A2

AEG-TELEFUNKEN
NACHRICHTENTECHNIK GmbH
Gerberstr. 33
D-7150 Backnang

PTL-BK/Ruf/ma
BK 81/113

## Lichtwellenleiter-Übertragungssystem

Die Erfindung betrifft ein Lichtwellenleiter-übertragungssystem mit Zwischenregeneratoren gemäß Oberbegriff des Anspruchs 1.

Durch die DE-OS 30 48 978 ist ein optisches Datenübertragungssystem bekannt geworden, bei dem Mittel zur elektrischen Impulsregeneration, bestehend aus einem Eingangsverstärker und einer Schwellwertschaltung eingesetzt sind, wobei die Vorderflanken des regenerierten Impulses aus dem
Überschreiten eines Schwellwerts und die Rückflanke aus dem
Unterschreiten desselben Schwellwerts abgeleitet wird und
wobei zwischen den Eingangsverstärker und die Schwellwertschaltung ein weiterer Verstärker geschaltet ist, der ein
frequenzabhängiges Überschwingen des Eingangssignals bewirkt.
Bei diesem gleichstromgekoppelten Datenübertragungssystem
wird die Verzerrung der Impulsbreite bei unterschiedlichen
Eingangssignalhöhen verringert, was allerdings zu Empfindlichkeitseinbußen führt. Außerdem unterliegt der Gleichstrom zeitlichen und temperaturabhängigen Schwankungen,
die nur durch aufwendige Schaltungen überwunden werden
können.

Aufgabe der vorliegenden Erfindung war es, ein Lichtwellen-
leiter-Übertragungssystem der oben angeführten Art anzugeben, mit dem in aufwandsgünstiger Weise mittels entsprechender Impulsregenerierung eine verzerrungsarme Impulsübertragung auch über mehrere hintereinandergeschaltete solcher Lichtwellenleiter-Übertragungssysteme ermöglicht wird.

Die Lösung erfolgt mit den im Patentanspruch 1 angegebenen
Mitteln.

Durch die Erfindung ergeben sich die Vorteile einer aufwandsgünstigen Regenerierung der längs des Übertragungsweges gedämpften und verzerrten Lichtimpulse mittels handelsüblicher, in großen Stückzahlen wirtschaftlich gefertigter und damit billiger PCM-Regeneratoren. Durch die Umsetzung
der Lichtimpulse in bipolare elektrische Impulse ergeben sich
die Vorteile der Gleichstromfreiheit bei der Weiterverarbeitung bzw. Regenerierung dieser Impulse. In einer Ausgestaltung der Erfindung ist die Umsetzung der Lichtimpulse in bipolare elektrische Impulse dem opto-elektronischen Empfänger
bzw. im elektro-optischen Sender integriert, so daß ein Zwischenregenerator des erfindungsgemäßen Lichtwellenleiter-Übertragungssystems lediglich aus den Baugruppen opto-elektronischer Empfänger, PCM-Regenerator, elektro-optischer Sender
und Stromversorgung besteht.

In einer anderen Weiterbildung der Erfindung erfolgt die
Übertragung der bipolaren elektrischen Impulse nach einem
quasi-ternären Code, der auch bei langen Null- oder Einsfolgen Polaritätswechsel aufweist, beispielsweise wie
HDB 3, wodurch ein Takt gewonnen werden kann, der mit dem
Originalgesendeten sehr gut übereinstimmt. Dadurch ist
eine noch bessere Regenerierung der ankommenden Impulse
möglich.

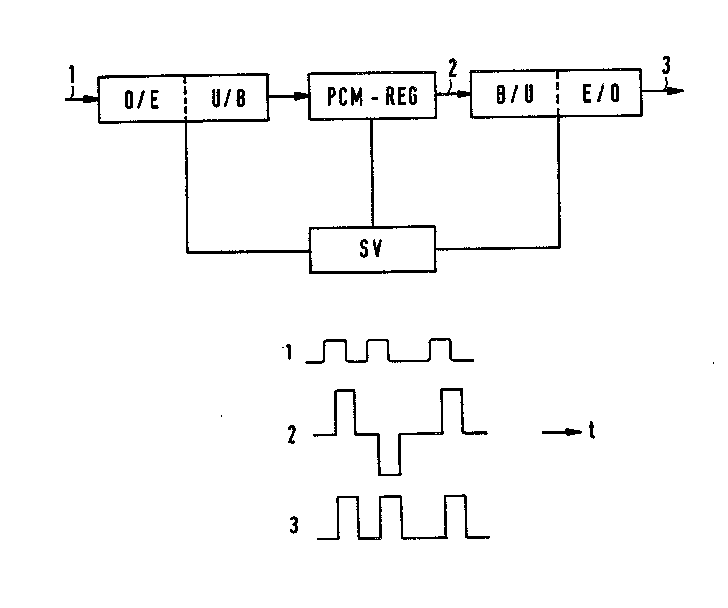

Es folgt die Beschreibung der Erfindung anhand der Figur.

0084625
BK 81/113

Die Figur zeigt das Blockschaltbild für ein Ausführungsbeispiel der Erfindung für einen Zwischenregenerator in der einen Übertragungsrichtung drei über der Zeit t aufgetraggenen Impulssignalen. Die gedämpften und verzerrten Lichtimpulse 1 gelangen in einen opto-elektronischen Empfänger O/E und werden dort in binäre elektrische Impulse umgesetzt. Nach einer weiteren Umsetzung dieser binären Impulse in bipolare (quasi-ternäre) elektrische Impulse im integrierten Unipolar-Bipolar-Wandler U/B werden letztere einem handelsüblichen PCM-Regenerator PCM-REG zugeführt, in dem sie nach Durchlaufen eines Amplituden- und eines Zeitdiskriminators neu geformt (2) werden. Ein solcher handelsüblicher PCM-Regenerator für das System PCM 30 ist beschrieben in dem Aufsatz von Hartmut Scheffler in "Technische Mitteilungen AEG-TELEFUNKEN", "Digitale Übertragungseinrichtungen" 1977, Seite 14 bis 17. Die regenerierten Impulse 2 werden nach Rückwandlung in unipolare Impulse im Bipolar-/Unipolar-Wandler B/U dem elektro-optischen Sender E/O zugeführt, der sie wieder in Lichtimpulse 3 wandelt. Die Anordnung wird von der gemeinsamen Stromversorgung SV mit elektrischer Energie versorgt.

. . . . . . . . .

0084625

AEG-TELEFUNKEN
NACHRICHTENTECHNIK GmbH
Gerberstrasse 33
D-7150 Backnang

PTL-BK/Ruf/ma
BK 81/113

Patentansprüche

1. Lichtwellen-Übertragungssystem mit Endstellen und Zwischengeneratoren, wobei die mittels elektro-optischer Sender
von der sendenden Endstelle und von den Zwischengeneratoren
ausgesandten, längs des Übertragungsweges gedämpften und
verzerrten Lichtimpulse in der empfangenden Endstelle bzw.
in den Zwischengeneratoren jeweils mittels opto-elektrischer Empfänger empfangen und mittels elektrischer Regeneratoren regeneriert werden, dadurch gekennzeichnet, daß in
der empfangenden Endstelle und in den Zwischenregeneratoren die Lichtimpulse (1) in bipolare elektrische Impulse
umgesetzt werden und daß diese mittels Regeneratoren für
PCM-Systeme (PCM-REG) regeneriert werden und daß diese so
regenerierten bipolaren elektrischen Impulse (2) in den
Zwischenregeneratoren wieder in Lichtimpulse (3) umgesetzt
werden.

2. Lichtwellenleiter-Übertragungssystem nach Anspruch 1,
dadurch gekennzeichnet, daß die Umsetzung mittels zwischen
opto-elektrischen Empfänger und PCM-Regenerator und zwischen PCM-Regenerator und elektro-optischen Sender eingefügtem elektrischem Uni-/Bipolar- (U/B) bzw. Bi-/Unipolar-Wandler (B/U) erfolgt.

0084625
BK 81/113

3. Lichtwellenleiter-Übertragungssystem nach Anspruch 1, dadurch gekennzeichnet, daß die Umsetzung im opto-elektrischen Empfänger bzw. im elektro-optischen Sender integriert ist.

4. Lichtwellenleiter-Übertragungssystem nach Anspruch 1, 2 oder 3, dadurch gekennzeichnet, daß die bipolaren elektrischen Impulse nach einem quasi-ternären Code übertragen werden, der auch bei langen Null- oder Einsfolgen Polaritätswechsel aufweist, wie HDB 3 oder dergleichen.

5. Lichtwellenleiter-Übertragungssystem nach einen der vorhergehenden Ansprüche, gekennzeichnet durch einen PCM-Regenerator der ersten Hierarchiestufe wie PCM 30 oder T1-System.

0084625